**Europäisches Patentamt**

**European Patent Office**

**Office européen des brevets**

(19)

(11) Numéro de publication : **0 279 726 B1**

(12)

# FASCICULE DE BREVET EUROPEEN

(45) Date de publication du fascicule du brevet :
**27.05.92 Bulletin 92/22**

(51) Int. Cl.⁵ : **A23B 7/148**, B65B 25/04

(21) Numéro de dépôt : **88400209.8**

(22) Date de dépôt : **29.01.88**

(54) **Procédé de conservation de denrées végétales crues périssables et conditionnées.**

(30) Priorité : **04.02.87 FR 8701346**

(43) Date de publication de la demande :
**24.08.88 Bulletin 88/34**

(45) Mention de la délivrance du brevet :
**27.05.92 Bulletin 92/22**

(84) Etats contractants désignés :
**BE CH DE ES FR GR IT LI LU NL SE**

(56) Documents cités :
**EP-A- 0 153 215**
**FR-A- 2 582 484**
**GB-A- 1 134 667**

(73) Titulaire : **L'AIR LIQUIDE, SOCIETE ANONYME POUR L'ETUDE ET L'EXPLOITATION DES PROCEDES GEORGES CLAUDE**
**75, Quai d'Orsay**
**F-75321 Paris Cédex 07 (FR)**

(72) Inventeur : **Drulhe-Aleman, Evelyne**
**3, rue du Val de Loire**
**F-78310 Maurepas (FR)**
Inventeur : **Richardeau, Thierry**
**"Le Village"-Magny-les-Hameaux**
**F-78470 Saint-Rémy-Les-Chevreuse (FR)**
Inventeur : **Besson, Philippe**
**8, rue de Bréhat**
**F-78180 Montigny-Le-Bretonneux (FR)**

(74) Mandataire : **Le Moenner, Gabriel et al**
**Societé l'Air Liquide Chef du Service Brevets et Marques 75, Quai d'Orsay**
**F-75321 Paris Cédex 07 (FR)**

**Description**

La présente invention concerne un procédé de conservation de denrées végétales crues comprenant les étapes de préparer la denrée, d'introduire la denrée préparée dans un emballage comprenant un film plastique présentant une perméabilité aux gaz déterminée, d'extraire l'atmosphère ambiante de l'emballage, d'introduire dans l'emballage un gaz ou un mélange gazeux de conservation dans une proportion déterminée par rapport à la quantité de denrée dans l'emballage, puis de stocker l'emballage à une température n'excédant pas + 4°C.

Un procédé de ce type est décrit dans le document EP-A-0153215. Dans le procédé selon ce document, seule la phase finale de stockage, sous film perméable ou imperméable, est menée à une température basse, typiquement de 4°C.

Toutefois, en raison des exigences croissantes des consommateurs, il a été recherché, selon l'objet de l'invention, un procédé fiable permettant de conditionner dans de bonnes conditions de sécurité pour l'utilisateur, une grande variété de légumes ou de fruits crus, lavés, découpés, dans un emballage plastique sous atmosphère modifiée, le produit alimentaire demeurant stable du point de vue de ses propriétés physiques, chimiques, biochimiques, microbiologiques et organoleptiques à température réfrigérée, typiquement entre 2-4°C, pendant au moins 15 jours.

Avant tout, il est apparu que la qualité originelle du légume ou du fruit est primordiale pour la bonne conduite d'une conservation satisfaisante. Aussi le choix de la variété, l'historique des traitements thermiques subis par le végétal avant lavage et découpe sont deux critères déterminants. De même, la qualité de l'eau utilisée pour le lavage peut directement influer sur le résultat comme le peut, d'ailleurs, la qualité des traitements phytosanitaires subis par le végétal en culture.

Pour atteindre l'objet précité, le procédé selon l'invention, du type défini plus haut, est caractérisé en ce que la préparation préalable de la denrée comporte une étape de stabilisation microbiologique et/ou physico-chimique de la denrée, et en ce que la totalité des opérations ci-dessus est effectuée à une température ne dépassant pas +4°C.

Comme le produit végétal est un organisme vivant, le conditionnement dans un emballage plastique impose un certain nombre de caractéristiques physico-chimiques au produit. L'étude des particularités de l'emballage a mis en évidence différentes propriétés que doit réunir le produit afin d'obtenir une excellente conservation : stabilité du point de vue enzymatique, du point de vue microbiologique et également organoleptique. De ce fait, il s'est révélé nécessaire de réaliser une stabilisation microbiologique et physico-chimique sous température contrôlée de la denrée végétale avant son introduction dans l'emballage et sa mise sous atmosphère modifiée.

Le document FR-A-2 582 484 décrit un procédé de conservation de légumes, crus ou cuits, coupés en morceaux, selon lequel le légume est trempé dans une solution vinaigrée, à température ambiante ou à température de cuisson, avant ensachage sous film étanche et atmosphère modifiée et stockage à une température entre 6 et 18°C.

La stabilisation microbiologique de la denrée végétale, avant conditionnement, mise en oeuvre par lavage de décontamination avec de l'eau chlorée, de l'eau chlorée carbonatée ou de l'acide peracétique dilué, de ladite denrée végétale, a pour effet la réduction de la population microbienne, par exemple de $10^7$ à $10^4$ germes/g. Le chlore peut être utilisé à raison de 0,1 à 0,2 ‰, en fonction de la législation.

La stabilisation physicochimique de la denrée végétale avant conditionnement est réalisé par la mise en oeuvre d'un pré-traitement par voie chimique, ou d'un pré-traitement par voie physique, ou d'un pré-traitement physique et chimique.

La stabilisation de la denrée végétale crue est obtenue par voie chimique par action d'un acidifiant, du type acide critique, acide acétique, vinaigre, acide peracétique ... Cette stabilisation par voie chimique peut aussi être obtenue par action d'un anti-oxydant du type acide ascorbique, métabisulfite de sodium ... Elle peut également être obtenue par action conjuguée d'un acidifiant et d'un antioxydant.

La stabilisation de la denrée végétale crue périssable peut être obtenue par voie physique en appliquant à ladite denrée au moins un des traitements choisi dans le groupe constitué par un traitement par choc thermique froid, un choc gazeux, un traitement de déshydratation de surface, un traitement par ionisation gamma ou par électrons accélérés.

Un traitement par choc thermique froid, consistant en un refroidissement rapide appliqué à la denrée végétale jusqu'à 0°C, et, en un maintien de ladite denrée à cette température pendant la durée nécessaire en fonction du produit traité, par exemple entre 30 minutes et 2 heures selon la nature du végétal, a pour effet un ralentissement du métabolisme du végétal, et un blocage du développement microbien.

Dans le traitement par choc gazeux, on utilise des mélanges gazeux actifs, pouvant contenir de l'anhydride carbonique, du protoxyde d'azote ou de l'oxyde de carbone, dans une enceinte à pression et température définies. A titre d'exemple, le choc gazeux peut être mis en oeuvre par passage de la denrée végétale dans une enceinte sous mélange gazeux contenant de l'anhydride carbonique avec complément en azote. Un traitement par choc gazeux permet d'annuler l'action des enzymes sur la denrée végétale.

Un traitement alliant un choc thermique froid et un choc gazeux, peut être mis en oeuvre dans une enceinte sous pression contenant un mélange gazeux à basse température, par exemple, selon le produit végétal la durée du traitement peut être comprise entre entre 15 et 90 minutes, dans une atmosphère d'anhydride carbonique, sous pression de 0,3 MPa et à la température de 2°C.

Un traitement par déshydratation de surface a pour effet l'abaissement de l'activité de l'au aW de la denrée végétale, donc une diminution des réactions enzymatiques d'hydrolyse et un ralentissement des développements microbiens.

Ce traitement peut consister en un refroidissement rapide par le vide de la denrée végétale suivi du cassage du vide par un mélange gazeux, contenant par exemple de l'anhydride carbonique, avec piégeage de l'eau excédentaire. Ledit traitement de déshydration de surface peut également être mis en oeuvre par passage du végétal dans une enceinte réfrigérée à forte convection avec piégeage de l'eau excédentaire.

On peut aussi appliquer au végétal un traitement par ionisation ayant effet la réduction de la flore contaminante et l'inhibition des enzymes. Ce traitement peut consister en un traitement par rayonnement gamma ($^{60}$Co) ou par électrons accélérés, à dose faible, par exemple 1 à 2 kGy.

Il a été constaté que le conditionnement judicieux de tout végétal requiert la connaissance et la maitrise de plusieurs paramètres représentés par les besoins gazeux du produit végétal, le film plastique de l'emballage et le gaz.

Le choix de l'emballage est essentiel pour assurer une bonne conservation des denrées végétales crues, périssables. En utilisant des films plastiques on cherche à limiter au maximum les échanges respiratoires de la denrée végétale crue, organisme vivant, en la maintenant dans une atmosphère riche en anhydride carbonique d'au moins 10 %, sans pour autant déclencher des mécanismes fermentaires.

Cet équilibre judicieux est atteint lorsque la quantité d'oxygène entrant dans l'emballage tel que sachet, barquette, conteneurs, est à peine suffisante pour assurer les besoins respiratoires ; l'anhydride carbonique formé tant par la respiration que par la dégradation cellulaire du végétal cru sort du film plastique de l'emballage en tout ou partie assurant la maintenance d'une atmosphère riche en anhydride carbonique.

La respiration du produit végétal cru entraine aussi une transpiration sous la forme d'une perte en eau, qui ne doit pas constituer un bouillon de culture pour les microorganismes, c'est-à-dire qu'il convient d'éviter les condensations sur l'emballage. En conséquence, la perméabilité du film plastique d'emballage doit être adaptée aux besoins respiratoires et au métabolisme de la denrée végétale. L'emballage est choisi d'un type tel que la surface du film laisse pénétrer une quantité d'oxygène inférieure ou égale à la demande en oxygène de la quantité de végétal cru conditionné, et laisse s'échapper l'anhydride carbonique excédentaire dégagé par le végétal.

Pour le même végétal cru les besoins respiratoires sont différents suivant la variété, le lieu de culture, la période et les conditions de culture.

Le film plastique étant choisi en fonction du végétal cru à conserver on est conduit à utiliser quatre grands types de film caractérisés par leur perméabilité aux gaz : oxygène, anhydride carbonique, azote et à la vapeur d'eau. La perméabilité de ces films des types 0, 1, 2 et 3 est donnée vis-à-vis de l'oxygène et de la vapeur d'eau, sachant que la perméabilité à l'anhydride carbonique s'obtient en multipliant par 3, voire par 5, celle à l'oxygène, et la perméabilité à l'azote s'obtient en divisant par 3 celle à l'oxygène.

La perméabilité d'un film plastique à l'oxygène est exprimée en cm3 par mètre carré de film en 24 heures à 23°C, O % HR et la perméabilité à la vapeur d'eau est exprimée en gramme par mètre carré de film en 24 heures à 38°C, 90 % HR.

Les films appartenant au type O présentent une perméabilité à l'oxygène inférieure ou égale à 30 et pour la vapeur d'eau inférieure ou égale à 2, mais pouvant atteindre 40 pour des films spéciaux (polyester). Ces films sont dits imperméables.

Les films appartenant au type 1 présentent une perméabilité à l'oxygène comprise entre 800 et 2500 et à la vapeur d'eau inférieure ou égale à 5. Ces films sont dits peu perméables.

Les films appartenant au type 2 présentent une perméabilité à l'oxygène comprise entre 2500 et 6000 et à la vapeur d'eau inférieure ou égale à 50. Ces films sont considérés comme semi-imperméables.

Les films appartenant au type 3 présentent une perméabilité à l'oxygène supérieure à 6000 et une perméabilité à la vapeur d'eau au moins égale à 10. Ces films sont considérés à forte perméabilité.

D'autre part, du fait de la respiration du végétal cru à conserver, correspondant à une absorption d'oxygène et à un rejet d'anhydride carbonique, il convient d'assurer au végétal un approvisionnement suffisant en oxygène pour sa survie et aussi une protection contre les agressions extérieures, étant donné sa fragilisation par la préparation préalable au conditionnement.

Le gaz choisi pour créer l'atmosphère modifiée du végétal cru est choisi parmi les gaz ou mélanges gazeux ayant un effet propre sur le métabolisme du végétal et ses contaminants, satisfaisant ou limitant ses besoins respiratoires.

Le gaz introduit dans l'emballage est choisi dans le groupe constitué par des gaz d'inertage, des gaz bactériostatiques, fongistatiques, inhibiteurs des réactions enzymatiques, ralentisseurs du métabolisme et assurant la maintenance de la respiration du végétal. Le gaz est choisi parmi l'azote, l'anhydride carbonique, le protoxyde d'azote, le monoxyde de carbone et l'oxygène, utilisé seul ou en mélange en proportions adaptées.

Les gaz pouvant être mis en oeuvre pour mieux conserver le végétal cru, ont des propriétés spécifiques qu'il convient d'utiliser judicieusement.

L'anhydride carbonique a un effet inhibiteur connu sur la croissance de nombreux germes, et à ce titre on peut l'utiliser comme composant de l'atmosphère.

L'oxygène utilisé à de fortes concentrations joue un rôle inhibiteur sur la flore aérobie et sur les lactobacilles qui sont généralement microaérophiles ; de plus, il assure la non prolifération des germes anaérobies mais peut éventuellement poser un problème d'oxydation.

L'azote utilisé en complément si nécessaire assure une atmosphère inerte prévenant les oxydations.

Le protoxyde d'azote a un pouvoir de dissolution important ; il se combine ainsi avec des électrons solvatés produisant des radicaux $OH°$ très toxiques pour la microflore du produit végétal cru.

Suivant les végétaux crus conditionnés, on peut citer, à titre exemplatif les gaz ou mélanges suivants : 100 % azote ; 20 à 60 % anhydride carbonique complément azote ; 50 à 90 % oxygène complément azote ; 10 à 100 % protoxyde d'azote complément azote. On peut également envisager des mélanges contenant une faible proportion de monoxyde de carbone au plus égale à 5 % avec complément azoteanhydride carbonique.

Il convient de rappeler que la limitation de l'intensité respiratoire d'une denrée végétale crue favorise sa bonne conservation. L'étude des intensités respiratoires montre la disparité des mesures relevées selon le végétal. Ces intensités respiratoires des végétaux crus, coupés ou râpés, sont à évaluer par rapport au légume ou fruit entier en multipliant l'intensité respiratoire par un facteur variant entre 3 et 5 selon l'espèce, la variété et la transformation du produit.

Il a été constaté que lors du conditionnement du végétal, le couplage du choc gazeux provenant de la création d'une atmosphère modifiée obtenue à partir de mélanges gazeux spécifiques, avec un choc thermique froid, entre 2 et 4°C, diminue fortement l'intensité respiratoire du végétal et inhibe la flore aérobie. Le choc gazeux s'exprime principalement par un effet anhydride carbonique. Quand le gaz introduit dans l'emballage contient de l'anhydride carbonique celuici est présent en quantité suffisante pour ralentir le métabolisme de la quantité de végétal conditionné et limiter le développement de la flore contaminante, tout en restant inférieure au seuil de toxicité pour le végétal et d'inconsommabilité par l'utilisateur.

Selon le type de film choisi, on peut s'orienter soit vers une atmosphère autocontrôlée par le végétal avec un film semi-perméable, et dans ce cas un mélange gazeux sans oxygène, créant un choc gazeux lors des premières heures, présente un intérêt ; soit vers une anaérobiose rapide avec un film dit imperméable de type O ; soit vers une atmosphère modifiée qui évolue lentement vers une anaérobiose, par exemple dans le cas de mélanges gazeux suroxygénés sous film de type O.

En outre, il a été remarqué que l'adaptation du couple gaz/film plastique au produit végétal cru, c'est-à-dire à l'intensité respiratoire et à la flore, est particulièrement avantageuse. Et en conséquence, dans la combinaison produit végétal/film plastique/gaz, une certaine relation entre le gaz et le végétal doit être respectée pour assurer au produit végétal une bonne qualité hygiénique et marchande.

Le rapport entre la quantité de gaz et la quantité de denrée végétale doit être choisi de telle sorte que la quantité de gaz disponible satisfasse ou limite les besoins respiratoires de la denrée végétale.

La surface d'échange plastique de l'emballage par rapport à la denrée végétale intervient dans l'obtention d'une bonne conservation de ladite denrée. Le rapport entre la surface des films plastique et la quantité de denrée végétale doit être choisi de telle sorte que la surface du film disponible satisfasse ou limite les besoins respiratoires de la denrée végétale.

La préparation d'un produit végétal cru périssable selon l'invention ne peut pas être assimilée à un simple conditionnement sous gaz, car le procédé fait appel à la combinaison de plusieurs opérations unitaires, dont le conditionnement sous atmosphère. Cette chaîne d'opérations unitaires doit être impérativement maintenue à une basse température inférieure à + 4°C, dans le but de limiter le développement microbien et d'abaisser l'intensité respiratoire du produit végétal. La préparation du produit : lavage, épluchage, parage voire découpage du végétal, le conditionnement sous gaz et la conservation avant consommation sont mis en oeuvre à température comprise entre + 2 et +4°C.

A titre d'exemple l'ensemble des opérations peut se présenter de la manière suivante : la matière première végétale crue est soumise à une opération de lavage et brossage en vue de l'élimination de la terre et des déchets ; à une opération d'épluchage-découpe (avec des couteaux) pour limiter la dissémination et le développement des microorganismes ; à une opération de trempage dans un bain d'eau chlorée (chlore à raison de 0,1 à 0,2 ‰) contenant un antioxydant, respectivement pour réduire la population microbienne et inhiber le brunissement enzymatique éventuel ; à une opération de rinçage en eau potable avec de l'eau froide à + 2°C, pour éviter la recontamination ; à un refroidissement rapide 2-4°C pour bloquer le développement microbien et abaisser l'intensité respiratoire ; à un essorage poussé pour limiter l'eau libre qui favorise le développement microbien ; à l'opération de conditionnement sous gaz avec un couple gaz/film adapté à la denrée végétale qui conduit au produit végétal fini sorti de fabrication ; le stockage, le transport et la distribution étant assurés à température entre 2 et 4°C.

Le procédé est avantageusement adapté à la conservation de tous légumes ou fruits crus, épluchés ou parés, lavés, entiers ou découpés selon une forme appropriée ou râpés, en emballages consommateurs plastiques, sachets ou barquettes ou conteneurs.

Il est donné ci-après des exemples de conditionnement qui illustrent l'invention.

Exemple 1 : Conservation du persil

On soumet du persil à un prétraitement comprenant un lavage en eau chlorée aux doses autorisées, à température inférieure ou égale à + 2°C ; à un rinçage à l'eau froide à température au plus égale à + 2°C ; puis un traitement de déshydratation de surface par refroidissement rapide par le vide.

Le persil ainsi préparé présente une intensité respiratoire IR = 60 mg $CO_2$ kg-h à 5°C.

Ensuite une fraction du persil prétraité est soumise à un conditionnement sous film de type 1 (ex. OPP 40 ) avec introduction d'azote dans l'emballage.

La seconde fraction de persil prétraité est soumise à un conditionnement sous film de type O avec introduction du mélange gazeux 50 % azote/50 % oxygène dans l'emballage.

Dans les deux cas, 100 g de persil ont été conditionnés dans un volume gazeux de 1000 cm³, la surface du sachet plastique étant de 800 cm², à température comprise entre 2 et 4°C ; et la durée de conservation à cette température est de 15 jours.

Exemple 2 : Conservation de salade

On soumet de la salade (batavia, laitue iceberg) à un prétraitement comprenant un lavage en eau chlorée aux doses autorisées, à température au plus égale à 2°C, un rinçage à l'eau froide à température au plus égale à 2°C, un essorage poussé par centrifugation.

La salade ainsi préparée présente une intensité respiratoire : IR produit entier à 5°C : 20 mg $CO_2$/kg-h et IR produit effeuillé à 5°C = 30 à 40 mg $CO_2$/kg-h.

On conditionne 250 g de salade dans un volume gazeux de 2300 cm3 ; la surface du sachet plastique type 1 (OPP 40 ) est de 1200 cm2 ; la perméabilité du sachet plastique à l'oxygène étant de 800 cm3/m2/24 h.

a) conditionnement dans un sachet rempli d'air (80 % azote - 20 % oxygène).

Le taux d'oxygène ne baisse que lentement car la consommation est presque équilibrée par l'entrée d'oxygène.

On doit attendre 5 à 7 jours pour observer l'établissement d'un équilibre gazeux avec un faible pourcentage d'oxygène et un pourcentage d'anhydride carbonique entre 5 et 15 %. Il n'y a donc pas d'effet gazeux anhydride carbonique au départ.

b) Conditionnement dans un sachet rempli avec un mélange 80 % azote 20 % d'anhydride carbonique ou avec 100 % d'azote.

Dès les premières minutes la salade subit un choc gazeux qui diminue son intensité respiratoire, il s'ensuit un parfait équilibre entre la consommation d'oxygène et l'entrée d'oxygène dans le sachet. L'équilibre est donc immédiat et il se produit un réel choc gazeux qui maintient la qualité hygiénique. La durée de vie est augmentée de 20 à 50 % suivant la variété et la qualité des salades. La durée de conservation est de l'ordre de 5 semaines à 2-4°C.

Exemple 3 : Conservation de carottes.

On soumet les carottes à un prétraitement comprenant un brossage, lavage en eau chlorée à température au plus égale à 2°C, un rinçage en eau froide, épluchage et découpe avec des couteaux, un traitement thermique froid par passage dans une enceinte réfrigérée à convection, pendant 30 minutes, avec déshydratation de surface.

L'intensité respiratoire du produit entier à 5°C est de 19 mg $CO_2$/kg-h et celui du produit râpé à 5°C de 60 à 100 mg $CO_2$/kg-h.

On conserve 250 g de carottes râpées dans un volume gazeux de 800 cm3, surface du sachet plastique 800 cm2 dans les conditions suivantes de conditionnement :
a) conditionnement à 2-4°C sous film type O, mélange gazeux introduit : 20 à 50 % $CO_2$ complément en $N_2$, durée de conservation 15 jours à 2-4°C.
b) conditionnement à 2-4°C, sous film type 1, mélange gazeux introduit : 20 à 50 % $CO_2$ complément en $N_2$, durée de conservation 21 jours à 2-4°C;
c) conditionnement à 2-4°C, sous film type 2, mélange gazeux introduit : 20 à 50 % $CO_2$ complément en $N_2$, durée de conservation 10 jours à 2-4°C.

Exemple 4 : Conservation de fleurette de chou-fleur.

On soumet la fleurette de chou-fleur à un prétraitement comprenant un lavage en eau chlorée aux doses autorisées température au plus égale à 2°C,à, un rinçage à l'eau froide, une découpe avec des couteaux.

Le chou ainsi préparé présente une intensité respiratoire IR produit entier à 5°C de 20 mg $CO_2$/kg-h et IR produit découpé à 5°C 100 mg $CO_2$/kg-h à 5°C.

On conditionne 250 g de fleurette de chou-fleur ainsi préparée dans un volume gazeux de 1200 cm$^3$ de gaz, sous un film de type 3, dont la surface est de 1000 cm$^2$,le gaz introduit dans l'emballage étant constitué par 80 % d'azote, 20 % d'anhydride carbonique. La durée de conservation est de 40 jours à 2-4°C.

**Revendications**

1. Procédé de conservation de denrées végétales crues, comprenant les étapes de préparer la denrée, d'introduire la denrée préparée dans une emballage comprenant un film plastique présentant une perméabilité aux gaz déterminée, d'extraire l'atmosphère ambiante de l'emballage, d'introduire dans l'emballage un gaz ou un mélange gazeux de conservation dans une proportion déterminée par rapport à la quantité de denrée dans l'emballage, puis de stocker l'emballage à une température n'excédent par +4°C, caractérisé en ce que la préparation préalable de la denrée comporte un étape de stabilisation microbiologique et/ou physicochimique de la denrée, et en ce que la totalité des opérations ci-dessus est effectuée à une température ne dépassant par +4°C.

2. Procédé selon la revendication 1, caractérisé en ce que la stabilisation microbiologique est réalisé par lavage avec de l'eau chlorée, de l'eau chlorée carbonatée ou de l'acide peracétique dilué, à une température ne dépassant pas +2°C.

3. Procédé selon la revendication 1 ou la revendication 2, caractérisé en ce que la stabilisation physicochimique est réalisée par action d'un acidifiant et/ou d'un antioxydant, d'un choc thermique froid, d'un choc gazeux, d'une déshydratation de surface ou d'un bombardement électromagnétique.

4. Procédé selon l'une des revendications 1 à 3, caractérisé en ce que le gaz de conservation est choisi parmi l'azote, l'oxygène, l'anhydride carbonique, le protoxyde d'azote, seuls ou en mélanges.

5. Procédé selon l'une des revendications 1 à 4, caractérisé en ce que le film plastique présente une perméabilité à des gaz du groupe comprenant l'oxygène, l'anhydride carbonique, l'azote et la vapeur d'eau.

6. Procédé selon la revendication 5, caractérisé en ce que le film plastique est du type perméable à l'oxygène et à l'anhydride carbonique.

7. Procédé selon la revendication 5 ou la revendication 6, caractérisé en ce que le rapport de la surface du film (en cm$^2$) à la masse de denrée introduite dans l'emballage (en grammes) est compris entre 3,2 et 8.

8. Procédé selon l'une des revendications précédentes, caractérisé en ce que le rapport du volume de gaz (en cm3) à la masse de denrée (en grammes) introduits dans l'emballage est compris entre 3,2 et 10.

9. Application du procédé selon l'une des revendications précédents à la conservation de légumes, agrumes ou fruits crus, entiers, épluchés ou découpés, en emballages consommateurs.

**Patentansprüche**

1. Verfahren zur Konservierung von rohen pflanzlichen Nahrungsmitteln mit den Stufen, in denen man das Nahrungsmittel herstellt, das hergestellte Nahrungsmittel in eine Verpackung einführt, die eine Kunststoffolie mit bestimmter Gasdurchlässigkeit umfaßt, die umgebende Atmosphäre aus der Verpackung abzieht, in die Verpackung ein Konservierungsgas oder Konservierungsgasgemisch in einem bestimmten Mengenverhältnis gegenüber der Nahrungsmittelmenge in der Verpackung einführt und sodann die Verpackung bei einer Temperatur, die 4 °C nicht übersteigt, lagert, **dadurch gekennzeichnet**, daß die vorausgehende Herstellung des Nahrungsmittels eine Stufe der mikrobiologischen und/oder physikochemischen Stabilisierung des Nahrungsmittels umfaßt und daß die Gesamtheit der obigen Operationen bei einer Temperatur durchgeführt wird, die 4 °C nicht übersteigt.

2. Verfahren nach Anspruch 1, **dadurch gekennzeichnet**, daß die mikrobiologische Stabilisierung durch Waschen mit gechlortem Wasser, gechlortem kohlensäurehaltigem Wasser oder verdünnter Peressigsäure bei einer Temperatur, die 2 °C nicht übersteigt, durchgeführt wird.

3. Verfahren nach Anspruch 1 oder Anspruch 2, **dadurch gekennzeichnet**, daß die physikochemische Stabilisierung durch Einwirkung eines Säurebildners und/oder eines Antioxidationsmittels, eines Kälteschocks, eines Gasschocks, einer Oberflächenentwässerung oder eines elektromagnetischen Beschusses durchgeführt wird.

4. Verfahren nach einem der Ansprüche 1 bis 3, **dadurch gekenzeichnet**, daß das Konservierungsgas unter Stickstoff, Sauerstoff, Kohlendioxid, Distickstoffmonoxid allein oder im Gemisch miteinander ausgewählt wird.

5. Verfahren nach einem der Ansprüche 1 bis 4, **dadurch gekennzeichnet**, daß die Kunststoffolie eine Durchlässigkeit für Gase der Gruppe Sauerstoff, Kohlendioxid, Stickstoff und Wasserdampf hat.

6. Verfahren nach Anspruch 5, **dadurch gekennzeichnet**, daß die Kunststoffolie von einem für Sauerstoff und Kohlendioxid durchlässigen Typ ist.

7. Verfahren nach Anspruch 5 oder Anspruch 6, **dadurch gekennzeichnet**, daß das Verhältnis der Folienoberfläche (in Quadratzentimetern) zu der Masse des in die Verpackung eingeführten Nahrungsmittels (in Gramm) zwischen 3,2 und 8 liegt.

8. Verfahren nach einem der vorausgehenden Ansprüche, **dadurch gekennzeichnet**, daß das Verhältnis des Gasvolumens (in Kubikzentimetern) zur Masse des in die Verpackung eingeführten Nahrungsmittels (in Gramm) zwischen 3,2 und 10 liegt.

9. Anwendung des Verfahrens nach einem der vorausgehenden Ansprüche zur Konservierung von Gemüse, rohen, ganzen, geschälten oder zerschnittenen Zitrusfrüchten oder anderen Früchten in Verbraucherverpackungen.

**Claims**

1. Process for the preservation of raw vegetable foods, comprising the stages of preparing the food, inserting the prepared food into a package comprising a plastics film having a predetermined permeability to gases, extracting the ambient atmosphere from the package, introducing into the package a gas or a gaseous preserving mixture in a predetermined proportion relative to the quantity of food in the package, then storing the package at a temperature not exceeding +4°C, <u>characterised in that</u> the preliminary preparation of the food comprises a stage of microbiological and/or physicochemical stabilisation of the food, and in that the above operations are carried out in their entirety at a temperature not exceeding +4°C.

2. Process according to claim 1, <u>characterised in that</u> the microbiological stabilisation is carried out by washing with chlorinated water, carbonated chlorinated water or dilute peracetic acid, at a temperature not exceeding +2°C.

3. Process according to claim 1 or claim 2, <u>characterised in that</u> the physicochemical stabilisation is carried out by the action of an acidifier and/or an antioxidant, a cold thermal shock, a gas shock, surface dehydration or electromagnetic bombardment.

4. Process according to one of claims 1 to 3, <u>characterised in that</u> the preserving gas is chosen from among nitrogen, oxygen, carbon dioxide, nitrogen monoxide, singly or in mixtures.

5. Process according to one of claims 1 to 4, <u>characterised in that</u> the plastics film is permeable to gases of the group comprising oxygen, carbon dioxide, nitrogen and water vapour.

6. Process according to claim 5, <u>characterised in that</u> the plastics film is of the type which is permeable to oxygen and carbon dioxide.

7. Process according to claim 5 or claim 6, <u>characterised in that</u> the relationship of the surface of the film (in $cm^2$) to the mass of food inserted in the package (in grammes) is between 3.2 and 8.

8. Process according to one of the preceding claims, <u>characterised in that</u> the ratio of the volume of gas (in $cm^3$) to the mass of food (in grammes) inserted in the package is between 3.2 and 10.

9. Application of the process according to one of the preceding claims to the preservation of legumes, citrus fruits or raw, whole, peeled or cut-up fruits, in consumer packages.